# EUROPÄISCHE PATENTSCHRIFT

(11) **EP 1 590 712 B1**
(45) Veröffentlichungstag und Bekanntmachung des Hinweises auf die Patenterteilung: **02.03.2011**
(21) Anmeldenummer: 03718597.2
(22) Anmeldetag: 29.01.2003
(51) Int. Cl.: G05B 19/41, G05B 19/4093, G05B 19/18, G05B 19/4099, G05B 19/425

(54) **VERFAHREN ZUR STEUERUNG VON RELATIVBEWEGUNGEN EINES WERKZEUGES GEGEN EIN WERKSTÜCK**
METHOD FOR CONTROLLING RELATIVE DISPLACEMENTS OF A TOOL AGAINST A WORKPIECE
PROCEDE POUR COMMANDER DES MOUVEMENTS RELATIFS D'UN OUTIL PAR RAPPORT A UNE PIECE

(43) Veröffentlichungstag der Anmeldung: 02.11.2005
(73) Patentinhaber: OPEN MIND Technologies AG, 82234 Wessling (DE)
(72) Erfinder: KOCH, Josef, 81379 München (DE)
(74) Vertreter: Grape & Schwarzensteiner
(86) Internationale Anmeldenummer: PCT/DE2003/000229
(87) Internationale Veröffentlichungsnummer: WO 2004/070483

(56) Entgegenhaltungen:
- EP-A- 0 282 599
- EP-A- 0 563 412
- DE-A- 3 613 096
- US-A- 4 664 570
- US-A- 5 020 001

## Beschreibung

Die Erfindung betrifft ein Verfahren zur Steuerung von Relativbewegungen eines Werkzeuges, insbesondere eines Fräswerkzeuges, eines Werkzeuges zur Material abtragenden Bearbeitung o. dgl. gegen ein Werkstück, gemäß dem Oberbegriff des unabhängigen Anspruchs.

Bei bekannten Verfahren zur Material abtragenden Bearbeitung von Werkstücken, wie sie bspw. als Fräsverfahren im Werkzeugund Formenbau eingesetzt werden, wird das Werkstück, welches zur Herstellung einer gewünschten Kontur bearbeitet werden soll, mit einem Fräskopf einer Fräsmaschine spanabhebend bearbeitet. Bekannt sind Verfahren, bei dem Relativbewegungen zwischen dem rotierenden Fräskopf und dem zu bearbeitenden Werkstück entlang dreier Linearachsen möglich sind. Diese drei Linearachsen stehen typischerweise in einem Winkel von jeweils 90° zueinander und spannen damit ein orthogonales dreiachsiges Koordinatensystem auf.

Die EP 0 282 599 A beschreibt dabei ein Verfahren zum exakten Bearbeiten von Ecken innerhalb einer zu bearbeitenden Kontur mittels Laserstrahl. Für Außenecken eines Werkstückes wird hier ein Verfahren aufgezeigt, bei welchem die Konturen des Werkstückes beidseits einer Ecke tangential u.U. mit einer linearen Verlängerung verlassen und mittels kreisförmiger Bewegung miteinander verbunden. Innerhalb dieser Verbindung kann dabei in einem Abstand zur Werkstückkontur der Vorschub oder die Laserleistung verändert werden. Eine Veränderung der Orientierung des Werkzeuges lehrt diese Schrift nicht.

Die EP 0563 412 A beschreibt ein Verfahren, bei welchem eine kontinuierliche Werkzeugbahn unterbrochen wird. Schwerpunkt ist hierbei das Freifahren und Wiederanfahren, wie es zum Beispiel für das Einwechseln eines Schwesterwerkzeuges oder nach einer Inspektion des Bearbeitungszustandes erforderlich ist.

Für die Bearbeitung komplizierter Werkstückformen, insbesondere solcher mit tieferen Kavitäten und/oder mit Hinterschneidungen, sind dreiachsige Strategien, bei denen das Werkzeug senkrecht zu einer ebenen Hauptbearbeitungsebene steht, oftmals nicht ausreichend. Dies liegt nicht zuletzt daran, dass insbesondere bei steileren Bereichen der Werkstückgeometrie Kollisionen zwischen Werkstück und Werkzeug bzw. dessen Werkzeughalter oder anderen Maschinenelementen auftreten können.

Um Kollisionen zu vermeiden oder auch die Schnittbedingungen zu verbessern, sind dreiachsige Relativbewegungen zwischen Werkzeug und Werkstück oft nicht mehr ausreichend. Mit dem Aufkommen der fünfachsigen Werkzeugmaschinen sind für diese Fälle Bearbeitungsverfahren bekannt, bei denen zusätzliche Schwenkbewegungen des Werkstückes und/oder des Werkzeuges um eine oder mehrere Schwenkachsen erfolgen. Je nach Anzahl der zusätzlichen Drehachsen und der "Betriebsart" spricht man von 4-achsiger, 5-achsiger, 3+1-achsiger oder auch von 3+2-achsiger Bearbeitung.

Die US 4 664 570 A beschreibt, auf welche Weise Bearbeitungen mit angestelltem Werkzeug auf Maschinen mit zwei Schwenk-/ Drehachsen ausgeführt werden können. Insbesondere wird dabei beschrieben, wie die Orientierung des Werkzeuges im Werkstückkoordinatensystem auf die Bewegungen der Maschinenachsen transformiert werden kann.

Die US 5 020 001 A beschreibt den Einsatz eines Roboters, um ein Werkstück an einem stationären Werkzeug vorbei zu führen, wobei zwischen vorgegebenen Positionen und Orientierungen kontinuierlich interpoliert wird. Bei konventionellen Maschinenkonzepten, wie in US 4 664 570 A dargestellt, ergibt sich eine 5-achsige Simultanbearbeitung - eine synchronisierte Bewegung aller Maschinenachsen - sowohl entlang der Linearachsen wie auch um die Drehachsen. Damit kann die Anstellung des Werkzeuges gleichzeitig mit seinem Vorschub entlang der Bearbeitungsbahn permanent variiert werden, um dem Verlauf einer Fläche zu folgen, Kollisionen zu vermeiden und/oder hinterschnittige Geometrien in einer einzigen Operation zu bearbeiten.

Wie in Publikationen zur Fertigungstechnik vielfach beschrieben ist, liegen die Probleme dieses Verfahrens weniger in der theoretischen Durchführbarkeit als in den Begrenzungen der vielfach verwendeten Werkzeugmaschinen, die aufgrund ihrer mechanischen bzw. ihrer steuerungs- und regelungstechnischen Eigenschaften oftmals nicht die geforderte Bearbeitungsgenauigkeit und damit qualität liefern können. Somit sind der simultanen 5-Achsbearbeitung durch die gegenwärtig verfügbare Maschinentechnik enge Grenzen gesetzt. Der kinematische Aufbau der im Werkzeug- und Formenbau typischerweise verwendeten schweren Werkzeugmaschinen sieht oftmals große Abstände von den Drehachsen zum Werkstück vor, wodurch sich bereits kleinste Ungenauigkeiten in der Bewegungsführung der Dreh-/Schwenkachsen stark negativ auf die Exaktheit der Bearbeitungsergebnisse auswirken. Auch Trägheiten der bewegten Massen des schwenkenden Werkzeugkopfes oder Werkstückes wirken sich negativ auf die Maßhaltigkeit beim Bearbeiten des Werkstückes aus. So können bspw. Steuerungsfehler im Bereich von Gradminuten Abweichungen in der Werkstückkontur von mehreren ZehntelMillimetern zur Folge haben. Im Werkzeugbau werden jedoch typischerweise Genauigkeitsabweichungen lediglich im Bereich von 0,005mm bis maximal 0,03mm toleriert. Aus diesem Grund ist die Verwendbarkeit derartiger Werkzeugmaschinen für die 5-achsige Simultanbearbeitung stark eingeschränkt.

Eine Alternative zu Methoden basierend auf einer 5-achsigen Simultanbearbeitung sind in Fertigungstechnik des Weiteren Verfahren für das Erstellen kollisionsfreier Bearbeitungsprogramme , bei denen das Werkzeug gegenüber dem Werkzeug fest angestellt wird. Die gesamte Bearbeitung wird dazu manuell in Bereiche aufgeteilt, die jeweils mit ausschließlicher Bewegung der Linearachsen und unveränderten Dreh-/Schwenkachsen bearbeitet werden können.

Für die Erstellung solcher Bearbeitungsprogramme kann zunächst für alle Bereiche eine Berechnung ohne Schrägstellung des Werkzeuges erfolgen. Die für eine kollisionsfreie Bearbeitung notwendige Anstellung kann dabei für die betreffenden Bereiche entweder abgeschätzt, mittels CAD-Programmen bestimmt oder auch beim Testen der Bearbeitungsprogramme auf der Bearbeitungsmaschine - dem so genannten "Teaching" ermittelt werden. Vorteilhaft an diesem Verfahren ist die relativ sichere Abgrenzbarkeit der Bearbeitungsbereiche gegeneinander, wobei zudem der Verlauf der Bearbeitungsbahnen relativ gut kontrolliert werden kann. Allerdings muss ein vergleichsweise hoher Aufwand zur Sicherstellung der Kollisionsfreiheit betrieben werden, da die Bewegungsbahnen von Werkzeug und Werkzeughalterung entweder punktuell geprüft werden müssen und/oder zusätzliche Simulationssoftware verwendet werden muss.

Bei einer weiteren Methode zur Bearbeitung mit fester Werkzeuganstellung wird die Bearbeitung für jeden Bereich mit entsprechend gekipptem Koordinatensystem separat berechnet, woraus eine geprüfte Kollisionsfreiheit resultiert. Allerdings ist für diese Methode ein wesentlich höherer Aufwand bei der Abgrenzung einzelner komplexer Bearbeitungsbereiche, die sinnvoller weise oftmals nur mit einem iterativen Prozess ermittelt werden kann, erforderlich. Zudem ist insgesamt die Kontrolle des Verlaufes der Bearbeitungsbahnen schwieriger

Eine Aufgabe der Erfindung besteht darin, ein Verfahren zur Steuerung von Relativbewegungen eines Werkzeuges gegen ein Werkstück zur Verfügung zu stellen, das eine hohe Bearbeitungsgüte mit minimalen Toleranzabweichungen ermöglicht, um die Nachteile im Stand der Technik zu überwinden.

Diese Aufgabe wird mit einem Verfahren gemäß Anspruch 1 gelöst. Merkmale vorteilhafter Weiterbildungen der Erfindung ergeben sich aus den abhängigen Ansprüchen.

Demgemäß wird bei dem Verfahren zur Steuerung von Relativbewegungen eines Werkzeuges gegen ein Werkstück, bei dem eine Werkzeugachse des Werkzeuges in allen Raumdimensionen zur Material abtragenden Bearbeitung des Werkstückes gegen dieses verschwenkt und/oder verschoben werden kann, eine gewünschte Zielkontur im Werkstück durch eine Abfolge von Relativbewegungen entlang einer Werkzeugbahn des Werkzeuges erzeugt

Erfindungsgemäß ist vorgesehen, dass die Werkzeugbahn in eine Vielzahl von Bahnsegmenten unterteilt wird, entlang derer sich das Werkzeug im Eingriff mit dem Werkstück befindet. Die Orientierung der Werkzeugachse wird innerhalb eines Bahnsegments gegenübe dem werstrücks konstant, gehalfen, wahrend sie über die gesamte Werkzeugbahn variabel ist. Dabel wird jeweils ein Endpunkt eines Bahnsegments über eine Verbindungs-Schwenkbewegung mit einem Startpunkt eines weiteren Bahnsegments verbunden. Während der Verbindungs-Schwenkbewegungen befindet sich das Werkzeug nicht im Eingriff mit dem Werkstück.

Das erfindungsgemäße Verfahren hat den Vorteil, dass damit kollisionsfreie Bearbeitungsvorgänge durchgeführt werden können, die eine abschnittsweise feste Anstellung des Werkzeuges erlauben. Dieses Verfahren hat den Vorteil, dass es auf vielen Werkzeug- und Messmaschinen zu wesentlich exakteren Ergebnissen führt, als dies bei einem Betrieb mit einem funfachsigen Simultan-Verfahren der Fall wäre.

Relativbewegungen die erfolgen des Werkzeuges gegen das Werkstück durch Linearbewegungen des Werkstückes in drei unterschiedliche Längsrichtungen sowie durch Schwenkbewegungen des Werkzeuges um zwei unterschiedliche Schwenkachsen. Diese Art der Relativbewegungen des Werkzeuges gegen das Werkstück ermöglicht die Anwendung des erfindungsgemäßen Verfahrens auf übliche Werkzeugmaschinen, wie sie in großer Zahl im Einsatz sind. Bei einer Fräsmaschine als Werkzeugmaschine kann dabei der Tisch mit dem darauf befestigten Werkstück in zwei verschiedene horizontale Richtungen verschoben werden. Die dritte Richtung, in die der Tisch verschoben werden kann, ist die Vertikale. Der Fräskopf mitsamt seiner Werkzeughalterung kann bei einem sogenannten fünfachsigen Fräser um zwei Schwenkachsen geschwenkt werden, die vorzugsweise orthogonal zueinander angeordnet sind.

Alternativ erfolgen die Relativbewegungen des Werkzeuges gegen das Werkstück durch Linearbewegungen des Werkstückes in zwei unterschiedliche Längsrichtungen sowie durch Schwenkbewegungen des Werkzeuges um zwei unterschiedliche Schwenkachsen sowie durch Linearbewegungen des Werkzeuges in eine dritte Längsrichtung. Auch diese Art der Bewegungssteuerung von Werkzeugmaschinen ist weit ver breitet. Beim Beispiel der Fräsmaschine kann dabei der Tisch mit dem darauf befestigten Werkstück in zwei verschiedene horizontale Richtungen verschoben werden. Der Fräskopf mitsamt seiner Werkzeughalterung kann bei einem sogenannten fünfachsigen Fräser um zwei Schwenkachsen geschwenkt werden, die vorzugsweise orthogonal zueinander angeordnet sind. Der Fräskopf kann zusätzlich in vertikale Richtung verschoben werden.

Aleternativ erfolgen die Relativbewegungen des Werkzeuges gegen das Werkstück durch Linearbewegungen des Werkzeuges in drei unterschiedliche Längsrichtungen sowie durch Schwenkbewegungen des Werkstückes um zwei unterschiedliche Schwenkachsen. Diese Art der Bewegungssteuerung weist insbesondere dann Vorteile auf, wenn das Werkstück mit seiner Halterung wesentlich kleiner und leichter ist als das Werkzeug mit seiner Werkzeughalterung.

Alternativ erfolgen die Relativbewegungen des Werkzeuges gegen das Werkstück durch Linearbewegungen des Werkstückes in zwei unterschiedliche Längsrichtungen sowie durch Schwenkbewegungen des Werkstückes um zwei unterschiedliche Schwenkachsen. Bei diesem Verfahren wird somit ausschließlich das Werkstück geschwenkt, während das Werkzeug mitsamt seiner Halterung starr bleibt. Diese Art der Bewegungssteuerung kann bei solchen Maschinen vorteilhaft sein, deren Werkzeug möglichst geringen Erschütterungen und Beschleunigungen unterliegen soll, wie dies bspw. bei optischen Geräten der Fall ist.

Ebenso kann vorgesehen sein, dass die Relativbewegungen des Werkzeuges gegen das Werkstück durch Schwenkbewegungen des an wenigstens drei linear verschieblichen Aufhängungen befestigten Werkstückes erfolgen. Diese Art der Werkzeugmaschinen sind als sog. Hexapod-Maschinen bekannt, bei denen der Tisch mitsamt dem darauf befestigten Werkstück an sechs Punkten abgestützt ist. An diesen sechs Abstützpunkten ist jeweils mittels Kugelgelenken ein linear verschleblicher Hydraulikzylinder befestigt. Diese sechs sog. hydraulischen Linearmotoren sind an ihren jeweiligen anderen Enden wiederum über Kugelgelenke an einem Fundament der Maschine fixiert. Durch aufeinander abgestimmte Auslenkungen der Hydraulikzylinder können fünfachsige Relativbewegungen zwischen Werkzeug- - bspw. ein Fräser, Laser oder dergl. - und Werkstück generiert werden. Für die Abstützung des Tisches sind wenigstens drei Linearantriebe erforderlich; am verbreitetsten sind allerdings Abstützungen mittels sechs Linearantrieben.

Eine bevorzugte Ausgestaltung des Verfahrens sieht ein Fräswerkzeug als Werkzeug zur Bearbeitung des Werkstückes vor. Diese in äußerst großer Zahl verbreitete Werkzeugmaschinenart eignet sich besonders zur Durchführung des erfindungsgemäßen Verfahrens, da mit diesen Maschinen aufgrund ihrer bauartbedingten Einschränkungen oftmals keine hochpräzisen fünfachsigen Simultanbearbeitungen möglich sind.

Eine alternative Ausgestaltung des Verfahrens sieht einen Laserkopf als Werkzeug zur Bearbeitung des Werkstückes vor. Auch hier bietet das erfindungsgemäße Verfahren vielfältige Vorteile, da es den Einsatz von relativ kostengünstigen Werkzeugmaschinen einfacherer Bauart ermöglicht, um Bearbeitungsergebnisse von hoher Präzision zu erzielen. Eine typische Anwendung ist bspw. die Leserbearbeitung eines Schmiedegesenks zur Herstellung von Achsschenkeln. Dies kann auf "abtragendem" Wege erfolgen, bei dem mittels sog. Laser-Caving das zu bearbeitende Werkstück aus Metall schichtweise durch Verdampfen auf das gewünschte Maß abgetragen wird. Eine weitere Möglichkeit der Laserbearbeitung liegt im sog. Laser-Welding, das eine "auftragende" Bearbeitung darstellt. Hierbei werden Metalllagen auf ein Werkstück geringerer Abmessungen als später erforderlich aufgetragen, indem bspw. seitlich zugeführter Metallstaub mittels Laserbearbeitung auf der Werkstückoberfläche aufgeschmolzen und mit dieser verbunden wird. Diese Werkstückoberfläche wird anschließend abtragend bearbeitet, um das gewünschte Endmaß zu erreichen. Die auf diese Weise gestaltete Werkstückoberfläche weist günstige Elastizitätseigenschaften beim Schmieden auf und unterliegt dadurch einem geringeren Verschleiß unter der hohen Schwall- und Druckbelastung, wie sie beim Schmieden auftritt.

Eine alternative Ausgestaltung des Verfahrens sieht ein Laser-Mossgerät als Werkzeug zur Bearbeitung des Werkstückes vor. Das Laser-Messgerät ist bspw. ein sog. Scanner zur Erfassung der dreidimensionalen Werkstückkontur. Bei dieser Anwendung bietet das erfindungsgemäße Verfahren ebenfalls große Vorteile, da mit einer relativ einfachen und kostengünstigen Kinematik zur Bewegungssteuerung der Messmaschine dennoch sehr exakte Messungen durchgeführt werden können.

Eine weitere Ausführungsform der Erfindung sieht vor, dass bei der Bewegung des Werkzeuges entlang eines einzelnen Bahnsegments Jeweils nur Relativbewegungen von Werkzeug und Werkstück zueinander entlang der Linearschsen erfolgen. Vorzugsweise erfolgen Relativbewegungen von Werkzeug und Werkstück zueinander um die Schwenkachsen ausschließlich in den Verbindungs-Schwenkbewegungen zur Verbindung zweier jeweils aufeinander folgender Bahnsegmente. Damit ist eine präzise und sehr maßhaltige Bearbeitung des Werkstückes sichergestellt, da jegliche Schwenkbewegungen um die Schwenkachsen unterbleiben, solange sich das Werkzeug im Eingriff mit dem Werkstück befindet. Die Linearbewegungen können bei einfacheren Werkzeugmaschinen meist mit einer deutlich höheren Präzision erfolgen als die Bewegungen um die Schwenkachsen, was insgesamt zu genaueren Bearbeitungsergebnissen führt.

Eine Verbesserung der Bearbeitungsgüte kann bei einfacher konstruierten Werkzeugmaschinen dadurch erreicht werden, indem zwischen zwei aufeinander folgenden Bahnsegmenten jeweils nur relativ kleine Anstellungsdifferenzen zugelassen werden. Damit sind Schwenkbewegungen - möglichst mit jeweils nur einer Schwenkachse während einer Verbindungs-Schwenkbewegung - in einem Winkelbereich von maximal 15° gemeint. Vorzugsweise sind zwischen zwei aufeinander folgenden Bahnsegmenten jeweils Anstellungsdifferenzen in einem Winkeibereich von weniger als 10°, bevorzugt jedoch von weniger als 7,5° zugelassen. Sollten In bestimmten Bearbeiungsbereichen des Werkstückes größere Schwenkbewegungen notwendig sein, kann dem durch Festlegung kleinerer Bahnsegmente begegnet werden.

Eine bevorzugte Ausführungsform der Erfindung sieht vor, dass bei dem Verfahren Gruppen jeweils aufeinander folgender Bahnsegmente gebildet werden. So kann bspw. eine Gruppierung In jeweils aufeinander folgenden benachbarten Bahnsegmenten erfolgen, die sich jeweils auf einer gemeinsamen horizontalen Querschnittsebene ("Höhenlinie") des Bearbeitungsbereiches des Werkstückes befinden. Ebenso möglich ist eine Gruppierung In sog. Bearbeitungstaschen, d.h. in Bearbeitungsbereiche mit auf jeweils unterschiedlichen Höhenlinien aufeinander folgender Bahnsegmente.

Jede der Verbindungs-Schwenkbewegungen des Werkzeuges, die tellweise auch aus sog. Verbindungsmakros bezeichnet werden, weist gemäß einer bevorzugten Ausführungsform des erfindungsgemäßen Verfahrens drei aufeinander folgende Phasen auf. Eine erste Phase umfasst eine Bewegung, bei der sich der Eingriffsbereich des Werkzeuges mit einer tangential an das zuvor durchlaufene Bahnsegment anschließenden Kurvenbewegung vom Werkstück entfernt, ohne dass dabei die Winkelorientierung der Werkzeugachse verändert wird. D.h. es erfolgt dabei keine Schwenkbewegung um die Werkzeugdrehachsen.

Eine zweite Phase umfasst eine Bewegung, bei der die Orientierung der Werkzeugachse relativ zum Werkstück in einer tangential an die erste Phase anschließenden Kurvenbewegung kontinuierlich so verändert wird, dass sie am Ende die Orientierung des folgenden Bahnsegments annimmt. In dieser zweiten Phase sind je nach Bedarf Bewegungen um alle fünf Achsen der Maschine zulässig.

Dabei kann in der zweiten Phase die Änderung der Orientierung der Werkzeugachse derart erfolgen, dass alle Linearachsen und alle Schwenkachsen jeweils eine ruckfreie Bewegung ausführen. Diese Art der Bewegung, bei der die dritte Ableitung der mathematischen Bewegungsglelchung stetig ist, führt zu einer gleichmäßigeren Maschinensteuerung und damit zu höherer Bearbeltungs- bzw. Messgenauigkeit und -güte. Die Bearbeitungs- bzw. Messgenauigkeit kann weiterhin dadurch erhöht werden, wenn die Änderungen der Orientierung der Werkzeugachse derart erfolgen, dass alle Schwenkachsen jeweils eine minimale Bewegung ausführen. Dies umfasst auch Orientierungsänderungen der Werkzeugachse, bei denen nur jeweils eine Schwenkachse bewegt wird, während die andere starr bleibt.

Vorzugsweise umfasst eine dritte Phase jeder Verbindungs-Schwenkbewegung eine tangential an die zweite Phase anschließenden Bewegung, bei der sich das Werkzeug in Richtung zum Werkstück bewegt, ohne dass dabei die Orientierung der Werkzeugachse verändert wird. Die Bewegung der dritten Phase mündet zudem tangential in die Bewegung des nachfolgenden Bahnsegments.

Bei einer weiteren Ausführungsform des erfindungsgemäßen Verfahrens ist vorgesehen, dass ausgehend von einem Startpunkt ein Bahnsegment auf die Weise bestimmt wird, dass das Werkzeug und das Werkstück innerhalb des Bahnsegments sowie die beidseitig anschließenden Verbindungs-Schwenkbewegungen keine Kollisionen aufweisen. Der Startpunkt kann bspw. von einem Benutzer vorgegeben werden. Die weitere Festlegung der Bahnsegmente erfolgt grundsätzlich unter der Prämisse der Kollisionsfreiheit, was zudem die Vorgabe mit der höchsten Priorität darstellt, denn die gewünschte Bearbeitungsgüte kann nur dann er reicht werden, wenn das Werkzeug inkl. seiner Halterung bei der Verfolgung der Werkzeugbahn nicht mit dem Werkstück kollidiert.

Gemäß einer weiteren Ausgestaltung des Verfahrens besteht eine weitere Vorgabe darin, dass die Bahnsegmente jeweils möglichst lang sind. D.h. es werden maximale Abschnitte bestimmt, die ohne Orientierungsveränderung der Werkzeugachse durchfahren werden können. Je weniger zeitraubende Verbindungs-Schwenkbewegungen erforderlich sind, desto zügiger kann die Bearbeitung erfolgen.

Eine weitere bevorzugte Ausführungsform der Erfindung sieht vor, dass der Abstand der Startpunkte benachbarter Bahnen minimal ist. D.h. die Startpunkte von benachbarten Bahnsegmenten, die jeweils auf benachbarten horizontalen Querschnittsebenen des Werkstückes liegen, lassen sich annähernd durch Geraden bzw. durch schwach gekrümmte Kurvenlinien verbinden. Dies führt zu sehr regelmäßigen Konturen des Werkstückes aufgrund der flächig gruppierten Bahnsegmente. Bei einer Gussform, die mittels Fräser bearbeitet wird, kann eine derartige Gruppierung zu einem verbesserten Fließverhalten des zu gießenden Materials sorgen, das entlang der als Mikrostruktur im Werkstück abgebildeten Startpunkte fließen kann.

Vorzugsweise folgen die Positionen der Startpunkte einem vorgegebenen Kurvenverlauf. Dieser vorgegebene Kurvenverlauf wird im vorliegenden Zusammenhang auch als Segmentgrenze bezeichnet, da die Bahnsegmente entlang dieser Linien oder Kurven jeweils aneinander stoßen. Die Bildung dieser Segmentgrenzen hat den zuvor beschriebenen positiven Einfluss auf die Regelmäßigkeit der fertig bearbeiteten Oberfläche, was zudem den optischen Qualitätseindruck deutlich verbessern kann.

Bei einer weiteren erfindungsgemäßen Ausgestaltung des Verfahrens ist vorgesehen, dass die Winkeldifferenzen der Orientierungen der Werkzeugachse zum vorangehenden Bahnsegment einen vorgegebenen Winkel nicht überschrelten. Diese Winkeldifferenz ist vorzugsweise möglichst klein, um keine Maßabweichungen in der Bearbeitung aufeinander folgender Bahnsegmente aufgrund von maschinenspezifischen Abweichungen vom vorgesehenen Bahnverlauf zu erzeugen.

Gemäß einer weiteren bevorzugten Ausführungsform des erfindungsgemäßen Verfahrens folgt die Orientierung der Werkzeugachse Innerhalb eines Bahnseg. ments einer manuellen Vorgabe. Die Anstellung des Werkzeuges resultiert aus der vorhergehenden Berechnung eines kollisionsfreien Bahnverlaufs. Die Segmentgrenzen ergeben sich dann zwangsläufig aus der Vorgabe, zwischen benachbarten Segmentgrenzen keine zu großen Anstellungsdifferenzen zu erhalten. Sind dennoch größere Winkelverstellungen notwendig, kann dem durch Festlegung entsprechend kürzerer Bahnsegmente begegnet werden.

Vorzugsweise bildet der Beginn des Eingriffes des Werkzeugs im Werkstück den Startpunkt für das erste Bahnsegment, d.h. die Sortierung und Gruppierung der Bahnsegmente hinsichtlich ihrer Bearbeitungsreihenfolge richtet sich nach dem Bearbeitungsbeginn des Werkzeugs. Der Startpunkt für das erste Bahnsegment kann mittels manueller Vorgabe definiert werden. Ebenso möglich ist jedoch auch die Bestimmung mittels eines Rechenalgorithmus, der einen optimalen Startpunkt für das erste Bahnsegment vorschlägt.

Gemäß einer weiteren bevorzugten Ausgestaltung des erfindungsgemäßen Verfahrens sind die nacheinander bearbeiteten Bahnsegmente jeweils Im Wesentlichen derart sortiert, dass der Abstand zwischen dem Endpunkt eines Bahnsegments zum Startpunkt des darauffolgenden Bahnsegments minimal ist. Diese Bearbeitungsmethode schließt einen sogenannten "Zick-Zack-Modus" ein, bei dem nacheinander in entgegengesetzte Richtungen bearbeitet wird. Auf diese Weise erstrecken sich die sog. Eilgang- bzw. Zustellbewegungen des Werkzeuges, bei denen es sich nicht im Eingriff mit dem Werkstück befindet, Ober relativ kurze Abschnitte, so dass auch die gesamte Bearbeitungszeit relativ kurz ausfallen kann.

Gemäß einer alternativen Ausführungsform des erfindungsgemäßen Verfahrens sind die nacheinander bearbeiteten Bahnsegmente jeweils im Wesentlichen derart sortiert, dass die Änderungen der Orientierung der Werkzeugachse minimal sind. Bei dieser Bearbeitungsmethode folgt der Eingriffsbereich des Werkzeuges in aller Regel bei aufeinander folgenden Bahnsegmenten der gleichen Bearbeitungsrichtung, woraus andererselts relativ lange Eilgangbewegungen zwischen Endpunkt eines Bahnsegments und Startpunkt des nächsten Bahnsegments resultieren. Die Qualität der Bearbeitungsergebnisse kann allerdings in manchen Fällen besser ausfallen als beim sog. Zick-Zack-Modus.

Die Erfindung wird nun anhand von Ausführungsformen mit Bezug auf die beillegenden Figuren näher erläutert.
- Figur 1: zeigt in einer perspektivischen Schemadarstellung ein Werkstück mit einer Zielkontur.
- Figur 2: zeigt eine Draufsicht auf das Werkstück entsprechend Figur 1.
- Figur 3: zeigt eine Prinzipdarstellung eines Fräswerkzeuges.
- Figur 4: zeigt eine perspektivische Darstellung des Werkstückes sowie darin vorgesehene Segmentgrenzen.
- Figur 5: zeigt eine Draufsicht auf das Werkstück entsprechend Figur 4.
- Figur 6: zeigt eine perspektivische Darstellung des Werkstückes zur Verdeut- lichung einer umlaufenden Bearbeitung.
- Figur 7: zeigt eine perspektivische Darstellung des Werkstückes zur Verdeut- lichung einer taschenweisen Bearbeitung.
- Figur 8: zeigt eine Draufsicht auf das werkstück entsprechend Figur 7.
- Figur 9: zeigt eine perspektivische Darstellung des Werkstückes zur Verdeut- lichung der Verbindungsmakros bei umlaufender Bearbeitung.
- Figur 10: zeigt eine perspektivische Darstellung des Werkstückes zur Verdeut- lichung der Verbindungsmakros bei taschenweiser Bearbeitung.
- Figur 11: zeigt einen Ausschnitt einer Werkzeugbahn entsprechend Figur 9.
- Figur 12: zeigt einen Ausschnitt einer Werkzeugbahn entsprechend Figur 10.

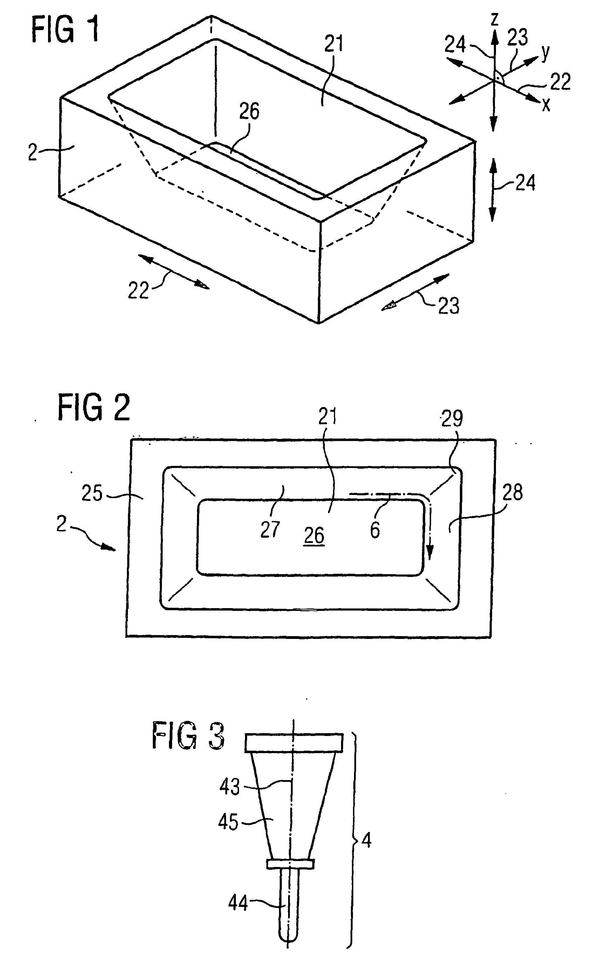

Das erfindungsgemäße Verfahren zur Steuerung von Relativbewegungen eines Werkzeuges gegen ein Werkstück wird anhand der Figuren 1 bis 12 beschrieben, wobei gleiche Teile grundsätzlich mit gleichen Bezugsziffern bezeichnet und daher teilwelse nicht mehrfach erläutert sind.

Figur 1 zeigt in einer perspektivischen Schemadarstellung ein quaderförmiges Werkstück 2, das mit einer Zielkontur 21 in Form einer wannenartigen Kavität versehen ist Derartige Werkstücke 2 werden bspw. für den Werkzeug-Formenbau benötigt, bei dem ein Metallblock mit einer Vertiefung versehen wird, um als Posttivform für eine Press- bzw. Tiefziehmatrize zu dienen. Das Werkstück 2 wird dabei typischerwelse zunächst in einem Gussverfahren mit einer gewünschten Grobkontur versehen, so dass es In einem nachfolgenden Fräsverfahren zu einer exakten und passgenauen Kontur weiter verarbeitet werden kann. Bei dem Material abtragenden Fräsverfahren muss somit nicht eine Vielzahl von Schichten abgetragen werden, sondern es werden in erster Linie die exakten Abmessungen des Werkstückes 2 hergestellt. Dies verdeutlicht auch, dass eine hohe Genauigkeit beim fünfachsigen Fräsen von wesentlicher Bedeutung für die Einhaltung der gewünschten Maße des Werkstückes 2 ist. Diese Genauigkeit kann bei zügigen Linear- und Schwenkbewegungen vieler Werkzeugmaschinen aufgrund deren hoher Massenträgheitsmomente sowie unvermeidlicher Toleranzen in der Werkzeugführung nicht eingehalten werden.

Im Folgenden wird beispielhaft eine fünfachsige Relativbewegung zwischen Werkzeug und Werkstück 2 beschrieben, bei der das Werkstück 2 entlang dreier jeweils senkrecht zueinander orientierten Linearachsen 22, 23, 24 verschoben werden kann. Die vierten und fünften Achsen stellen dabei Drehachsen dar, um die das Werkzeug - im vorliegenden Ausführungsbeispiel ein Fräswerkzeug 4 (vgl. Figur 3) - verschwenkt werden kann.

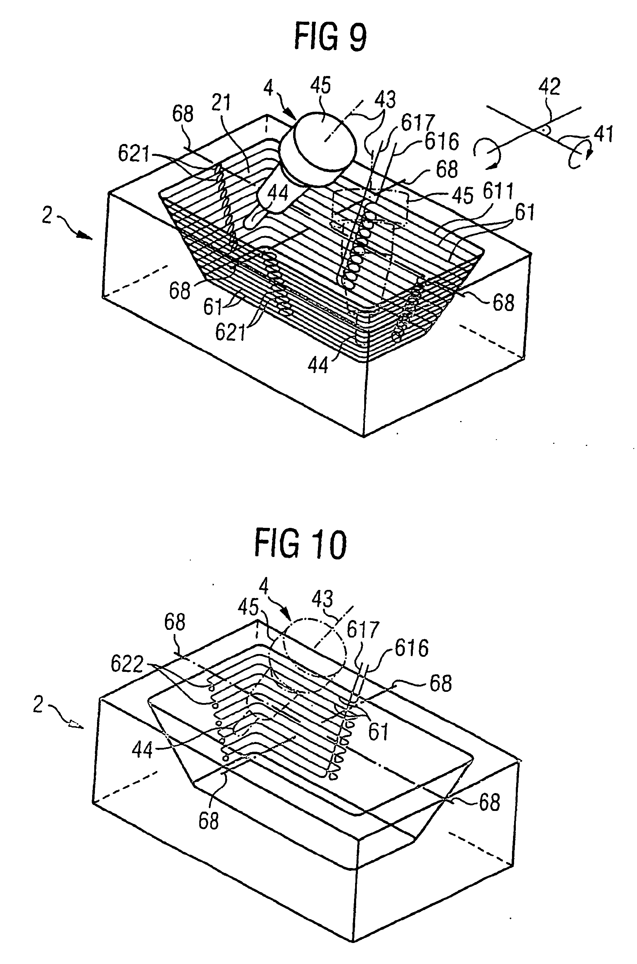

Figur 3 zeigt eine Prinzipdarstellung eines als beispielhaftes Werkzeug verwende- - ten Fräswerkzeuges 4. Dieses Fräswerkzeug 4 weist einen länglichen, zylindrischen Fräskopf 44 auf, dessen Eingriffsbereich wie in der gezeigten Darstellung abgerundet sein kann. Der Eingriffsbereich des Fräskopfes 44 kann wahlweise auch scharfkantig ausgestaltet sein. Der Fräskopf 44 ist mittig in eine Werkzeughalterung 45 eingespannt, die während des Fräsvorganges mitsamt dem Fräskopf 44 um die Werkzeugachse 43 rotiert Bei den im vorliegenden Zusammenhang beschriebenen Schwenkbewegungen um die winkelig zueinander orientierten Schwenkachsen 41 und 42 (vgl. Figur 9 ) ist grundsätzlich eine entsprechende Bewegung der Werkzeugachse 43 gemeint

Die drei Linearachsen 22, 23, 24 sind entsprechend dem in Figur 1 gezeigten Ausführungsbeispiel jeweils parallel zu den Werkstückkanten orientiert, so dass die erste Linearachse 22 parallel zur x-Achse des zur besseren Orientierung eingezeichneten Koordinatensystems sowie parallel zu einer waagrechten Kante des quaderförmigen Werkstückes 2 liegt. Die zweite Linearachse 23 steht senkrecht zur ersten Linearachse 22 und liegt parallel zur y-Achse sowie parallel zu einer zweiten waagrechten Werkstückkante. Die dritte Linearachse 24 steht senkrecht zur ersten und zur zweiten Linearachse 22, 23 und liegt parallel zur z-Achse sowie parallel zu einer senkrechten Werkstückkante.

Figur 2 zeigt eine schematische Draufsicht auf eine flache Oberseite 25 des quaderförmigen Werkstückes 2 gemäß Figur 1, das mit der Zelkontur 21 in Form einer wannenförmigen Vertiefung versehen Ist. Wie anhand der Figuren 1 und 2 deutlich wird, kann mit einem um eine senkrechte Rotationsachse rotierenden Fräser die gewünschte Zielkontur 21 nur dann vollständig bearbeitet werden, wenn die Einspannung des Fräsers ausreichend kompakt bzw. wenn das freistehende Ende des Fräsers hinreichend lang ist. In diesen Fällen besteht andererseits die Gefahr einer elastischen Verformung des Fräskopfes, was zu uner wünschten Maßabweichungen bei der Bearbeitung der Zielkontur 21 des Werkstückes 2 führt.

Die tieferen Bereiche und Insbesondere der Bodenbereich 26 In den übergängen zu den schräg abfallenden Wandabschnitten der wannenförmigen Zielkontur 21 lassen sich ab einer bestimmten Steilheit der Wandabschnitte nicht ohne Kollislonen der Werkzeughalterung des Fräswerkzeuges mit höher liegenden Wandabschnitten bearbeiten.

Wird nun zur Bearbeitung eines tief liegenden Wandabschnittes In Nähe des Bodenbereiches 26 die Rotationsachse des Fräswerkzeuges mitsamt dessen Werkzeughalierung um einen Anstellwinkel schräg gestellt, so dass der zwischen Rotationsachse bzw. Werkzeugachse des Fräsers und Oberfläche der Zielkontur 21 eingeschlossene Winkel größer wird, so droht bei einer Verfolgung einer Werkzeugbahn, die einer engen Kurve der Zielkontur 21 folgt, eine Kollision des Werkzeughalters met einem weiteren angrenzenden Wandabschnitt.

Diese Problematik soll beispielhaft anhand der Figur 2 verdeutlicht werden, bei der ein kurzer Abschnitt einer Werkzeugbahn 6 durch einen strichpunktierten Pfeil verdeutlicht ist. Diese verlauft entlang eines nahe des Bodenbereichs 26 liegenden Bereiches eines ersten schrägen Wandabschnittes 27, verfolgt einen relativ engen Radius 29 und verläuft weiter auf gleicher horizontaler Höhe des Werkstückes 2 entlang eines zweiten Wandabschnittes 28. Eine Anstellung des Rotationswerkzeuges um einen geraden Winkel gegen die Oberfläche des ersten Randabschnittes 27 lässt die Werkzeughalterung dennoch mit einem oberen Bereich des zweiten Wandabschnittes 28 kodierten, sobald der Fräskopf bei seiner Verfolgung der Werkzeugbahn 6 in Nähe des Radius 29 gelangt.

Eine Kollision der Werkzeughalterung mit dem Werkstück 2 kann vernieden werden, indem der Fräser mit einer fest stehenden schrägen Anstellung betrieben wird, die sowohl gegen den ersten Wandabschnitt 27 wie auch gegen den zweiten Wandabschnitt 28 um annähernd den gleichen Winkel angewinkelt ist. Allerdings würde die Werkzeughalterung in diesem Fall mit dem nächsten angrenzenden Wandabschnitt kollidieren, sofern die Anstellung nicht Im Betrieb verändert wird.

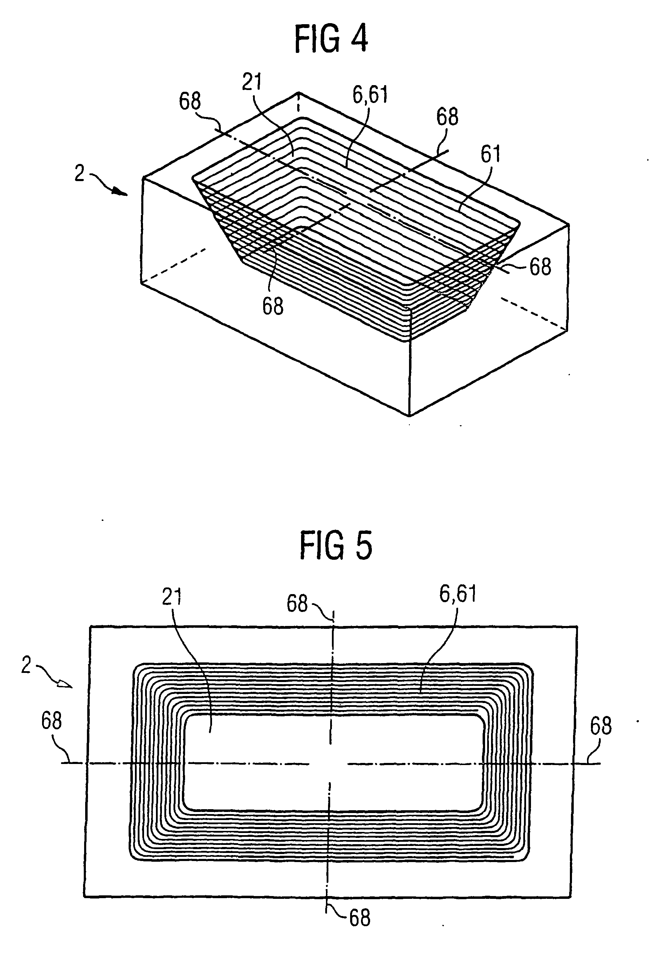

Eine Lösung dieser Koliisionsproblematik kann in der Bearbeitung des Werkstückes mittels eines fünfachsigen-simultanen Fräsprogramms liegen, die allerdings auf vielen bereits vorhandenen Werkzeugmaschinen die zuvor erwähnten Probleme hinsichtlich der erzielbaren Genauigkeiten zeigt. Eine erfindungsgemäße Lösung dieser Problematik besteht in einer Bearbeitungsmethode, bei der die gesamte Werkzeugbahn 6 zur Bearbeitung der Zielkontur 21 in mehrere, ggf. in eine Vielzahl von Bahnsegmenten aufgeteilt wird, die mit abschnittsweise festen Werkzeuganstellungen durchfahren werden können. Beim Verfolgen dieser Bahnsegmente befindet sich das Rotationswerkzeug im Eingriff mit dem Werkstück, 2. Eine Verstellung des Rotationswerkzeuges um die Werkzeugschwenkachsen erfolgt bei dieser Methode nur beim Durchfahren von sogenannten Verbindungs-Schwenkbewegungen - im Folgenden auch als Verbindungsmakros bezeichnet -, bei denen sich das Werkzeug nicht im Eingriff mit dem Werkstück befindet. Die Position der Verbindungsmakros kann dabei manuell vorgegeben werden oder auch derart automatisch berechnet werden, dass möglichst lange kollisionsfreie Bahnsegmente entstehen. Diese erfindungsgemäße Methode wird im Folgenden anhand der Figuren 4 ff. beschrieben..

Die Figuren 4 und 5 zeigen jeweils schematische Ansichten des Werkstückes 2 entsprechend Figur 1, wobei Figur 4 als perspektivische Ansicht und Figur 5 als Draufsicht dargestellt ist. Die Werkzeugbahn 6 ist Innerhalb der wannenförmigen Zieikontur 21 in eine Anzahl von jeweils zueinander parallelen Bahnsegmenten 61 aufgeteilt. Segmentgrenzen 68, an denen jeweils benachbarte Bahnsegmente 61 aneinander grenzen, sind als Linien angedeutet, die jeweils senkrecht zu den Wandabschnitten 27, 28 stehen.

Die Segmentgrenzen 68 sind in dem gezeigten Ausführungsbeispiel vom Benutzer manuell gesetzte Bereichsgrenzen, an denen benachbarte Bahnsegmente 61 aneinander grenzen. Sie müssen nicht notwendigerweise für übereinander liegende Bahnsegmente 61 jeweils deckungsgleich übereinander liegen, wie dies in den Figuren 4 und 5 angedeutet ist, sondern können ebenso gut beliebig gegeneinander verschoben sein. Allerdings ist bei einer derartigen symmetrischen Werkstückkontur eine deckungsgleiche Anordnung der Segmentgrenzen 68 bzw. Bereichsgrenzen sinnvoll, da auf diese Weise jeweils parallele Vorschubbewegungen des Rotationswerkzeugs bei übereinander liegenden Bahnsegmenten 61 und damit eine homogene Oberflächenstruktur nach der Bearbeitung sichergestellt ist. Eine solch homogene Oberflächenstruktur kann bspw. aus Gründen eines verbesserten Fließverhaltens eines Gusswerkzeuges aufgrund der günstigeren Mikrostruktur in der Werkstückobefläche wünschenswert sein. Auch kann eine derartige homogene Werkstückoberfläche aus Gründen des optischen Qualitätseindrucks von besonderem Interesse sein. Für diese Fälle bietet die beschriebene Sortierung der Segmentgrenzen 68 die gewünschte Lösung.

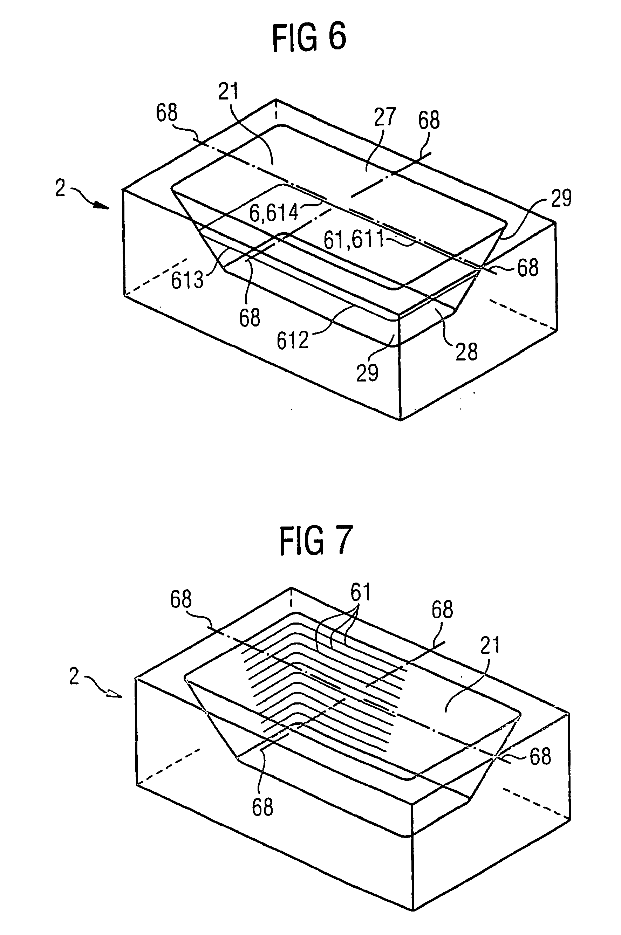

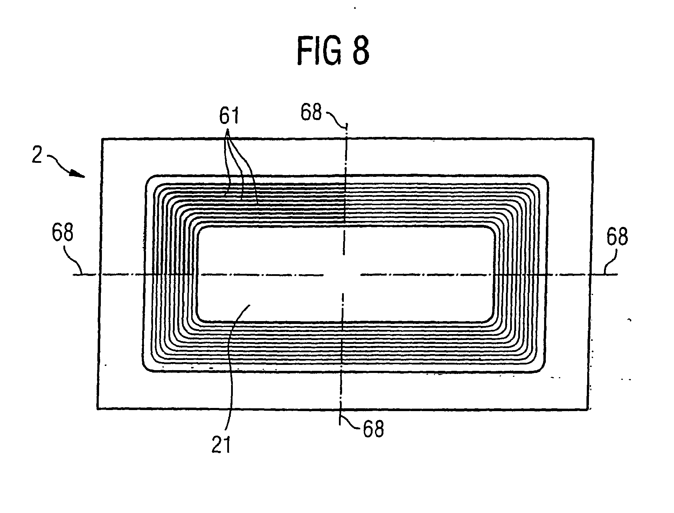

Wie anhand der Figuren 6 bis 8, die jeweils perspektivische Ansichten (Figuren 6 und 7) bzw. eine Draufsicht (Figur 8) des Werkstückes 2 mit der wannenförmigen Zielkontur 21 darstellen, deutlich wird, kann die Sortierung der Bahnsegmente 61 wahlweise auf zwei verschiedene Arten stattfinden.

Figur 6 verdeutlicht eine Sortierung mit in Vorschubrichtung des Rotationswerkzeugs fortlaufender Werkzeugbahn 6, wobei die aufeinander folgenden Bahnsegmente 61 jeweils unmittelbar aneinander grenzen und an den Segmentgrenzen 68 durch Verbindungsmakros 62 (d.h. durch Verbindungs-Schwenkbewegungen des Rotationswerkzeuges) verbunden sind. Die Werkzeugbahn 6 ist hierbei in umlaufende Bahnen auf verschiedenen Höhenniveaus unterteilt. Im gezeigten Ausführungsbeispiel ist jedes Höhenniveau in vier Bahnsegmente 61 unterteilt, die jeweils eine Hälfte eines ersten geraden Wandabschnittes 27, eines an diesen grenzenden zweiten geraden Wandabschnittes 28 sowie des Radius 29 umfassen, der jeweils eine Verbindung zwischen geraden Wandabschnitten bildet. Ein erstes, zweites, drittes und viertes Bahnsegment 611, 612, 613, 614 befindet sind Jeweils auf einem gemeinsamen Höhenniveau der Zielkontur 21. Ein fünftes Bahnsegment befindet sich demzufolge auf einem darunter liegenden weiteren Höhenniveau.

Diese Bearbeitungsstrategie ist insbesondere dann vorteilhaft, wenn auf Maschinen mit relativ guten dynamischen Eigenschaften umfaufend bearbeitet werden soll. Die bearbeiteten Bahnsegmente 61 können hierbei relativ groß gewählt werden. Die Verbindungs-Schwenkbewegungen des Rotationswerkzeugs an den Segmentgrenzen 68 können hierbei relativ schnell ausgeführt werden.

Die Figuren 7 und 8 verdeutlichen eine Sortierung der Bahnsegmente 61.quer zur Vorschubrichtung, was im Folgenden als taschenartige Sortierung bezeichnet wird. Dabei werden jeweils Bahnsegmente 61, die durch benachbarte Segment grenzen 68 unterteilt sind, zu Gruppen von übereinander liegenden Bahnsegmenten 61 zusammen gefasst.

Eine solche Bearbeitungsstrategie ist insbesondere dann vorteilhaft, wenn auf Werkzeugmaschinen mit ungünstigeren dynamischen Eigenschaften bearbeitet wird und/oder wenn die Bahnsegmente 61 jeweils relativ kurz sind, so dass die notwendigen Eilgangbewegungen schneller sind als die Bewegung im Verbindungsmakro. Die beschriebene Bearbeitungsstrategie kann auch dann von Vorteil sein, wenn ein Wechsel zwischen Gleich- und Gegenlauf (sog. Zick-Zackr Bewegung) akzeptiert werden kann. Die Drehachsen der Werkzeugmaschine sind hierbei weniger im Einsatz als bei der zuvor beschriebenen Bearbeitungsmethode.

Anhand der perspektivischen Schemadarstellungen der Figuren 9 und 10 werden die Verbindungsmakros 62 bzw. Verbindungs-Schwenkbewegungen zur Beschreibung der Bewegungen des Rotationswerkzeuges - im vorliegenden Ausführungsbeispiel ein Fräswerkzeug 4 - zwischen aufeinander folgenden Bahnsegmenten 61 näher erläutert, die im Wesentlichen jeweils aus einer kombinierten Schwenkbewegung des Fräswerkzeuges 4 und damit auch des Fräskopfes 44 um seine erste und zweite Schwenkachse 41, 42 bestehen. Die beiden Schwenkachsen 41, 42, die vorzugsweise senkrecht zueinander orientiert sind, sind in Figur 9 symbolisch angedeutet.

Dabei verdeutlicht Figur 9 die ersten Verbindungsmakros 621 zwischen benachbarten Bahnsegmenten 61 bel in Vorschubrichtung fortlaufender Bearbeitung (vgl. Figur 6). Figur 10 verdeutlicht die zweiten Verbindungsmakros 622 zwischen benachbarten Bahnsegmenten 61 bei "taschenartiger" Bearbeitung ("Zick Zack-Modus", vgl. Figuren 7, 8).

Erkennbar ist in den Figuren 9 und 10 weiterhin jeweils ein Anfahrsegment 616 sowie ein Abfahrsegment 617, bei denen sich der Fräskopf 44 des Fräswerkzeuges 4 nicht im Eingriff mit dem Werkstück 2 befindet. Das Anfahrsegment 616 charakterisiert die Zustellbewegung des Fräskopfes 44 zum Werkstück 2 und stellt die Verbindung zum ersten Eingriffspunkt der Werkzeugbahn 6 und damit auch gleichzeitig zum ersten Bahnsegment 611 dar. Das Abfahrsegment 617 charakterisiert die Bewegungsbahn des Fräskopfes 44 nach Durchlaufen der Werkzeugbahn 6 und damit nach der Bearbeitung der vollständigen Zielkontur 21 bzw. eines taschenförmigen Abschnittes derselben.

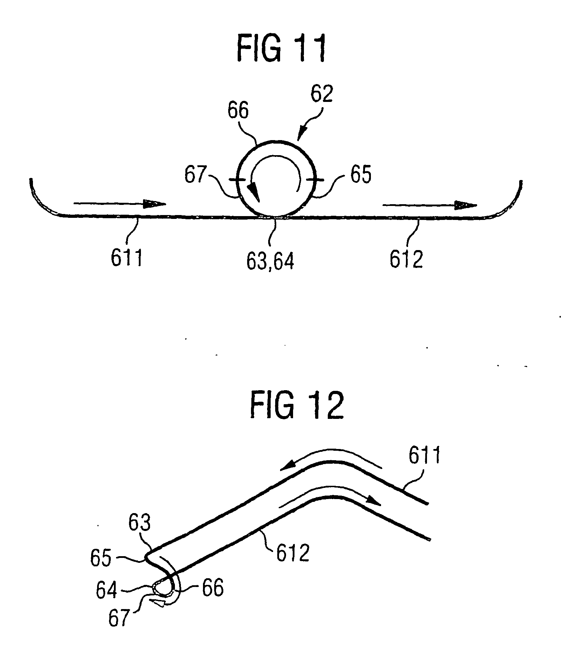

Anhand der Figuren 11 und 12 werden die Verbindungsmakros 62 in ihren Einzelheiten beschrieben, wobei die Figur 11 einen Ausschnitt einer Werkzeugbahn 6 entsprechend Figur 9 und Figur 12 einen Ausschnitt einer Werkzeugbahn 6 entsprechend Figur 10 näher verdeutlicht. Jedes Verbindungsmakro 62 umfasst jeweils drei Phasen, wobei eine erste Phase 65 eine Kurvenbewegung des Fräskopfes 44 beschreibt, die tangential vom Endpunkt 63 bspw. eines ersten Bahnsegments 611 in eine Kurvenbewegung mündet. Der Endpunkt 63 des ersten Bahnsegments 611 stellt den letzten Punkt des spanabhebenden Eingriffs des Fräskopfes 44 mit dem Werkstück 2 dar. Während der ersten Phase 65 wird der Fräskopf 44 des Fräswerkzeuges 4 in einer Kurvenbewegung aus dem Eingriff mit dem Werkstück 2 geschwenkt. Die erste Phase 65 kann somit auch als Abfahrbewegung des Rotationswerkzeuges charakterisiert werden, da hierbei das Fräswerkzeug 4 aus dem Eingriffsbereich heraus gefahren wird.

Eine zweite Phase 66 kann als sogenannte Umorientierungsphase bezeichnet werden, da hierbei das Fräswerkzeug 4 eine andere Anstellung erhält, wie sie für das nachfolgende zweite Bahnsegment 612 erforderlich ist. Die erste Phase 65 des Verbindungsmakros 62 mündet tangential in die Kurvenbewegung der zweiten Phase 66, welche wiederum tangential in eine dritte Phase 67 mündet.

Diese dritte Phase 67 mündet wiederum tangential in das in der jeweiligen Grupplerung der Bahnsegmente 61 auf das erste Bahnsegment 611 unmittelbar folgende zweite Bahnsegment 612. Die dritte Phase 67 kann als Anfahrphase charakterisiert werden, da hierbei der Fräskopf 44 des Fräswerkzeuges 4 auf den Startpunkt 64 des zweiten Bahnsegments 612 gesetzt wird, der den ersten Punkt des Eingriffs des Fräskopfes 44 mit dem Werkstück 2 dieses zweiten Bahnsegments 612 darstellt.

## Patentansprüche

1. Verfahren zur Steuerung von Relativbewegungen eines Werkzeuges (4) gegen ein Werkstück (2), bei dem eine Werkzeugachse (43) des Werkzeuges (4) in allen Raumdimensionen zur Material abtragenden Bearbeitung des Werkstückes (2) gegen dieses verschwenkt und/oder verschoben werden kann, und bei dem eine gewünschte Zielkontur (21) des Werkstückes (2) durch eine Abfolge von Relativbewegungen entlang einer Werkzeugbahn (6) des Werkzeuges (4) erzeugt wird, **dadurch gekennzeichnet, dass** die Werkzeugbahn (6) in eine Vielzahl von Bahnsegmenten (61) unterteilt wird, entlang derer sich das Werkzeug (4) im Eingriff mit dem Werkstück (2) befindet, wobei die Orientierung der Werkzeugachse (43) innerhalb eines Bahnsegments (61) gegenüber dem Werkstück (2) konstant gehalten wird, während sie über die gesamte Werkzeugbahn (6) variabel ist, und wobei jeweils ein Endpunkt (63) eines Bahnsegments (61) über eine Verbindungs-Schwenkbewegung (62), bei der sich das Werkzeug (4) nicht im Eingriff mit dem Werkstück (2) befindet und in deren Verlauf die Orientierung der Werkzeugachse (43) verändert werden kann, mit einem Startpunkt (64) eines weiteren Bahnsegments (61) verbunden wird.

2. Verfahren Anspruch 1, **dadurch gekennzeichnet, dass** das Werkzeug ein Fräswerkzeug (4) oder ein Laserkopf oder ein Laser-Messgerät ist.

3. Verfahren nach Anspruch 1 oder 2, **dadurch gekennzeichnet, dass** bei der Bewegung des Werkzeuges (4) entlang eines einzelnen Bahnsegments (61) jeweils nur Relativbewegungen von Werkzeug (4) und Werkstück (2) zueinander entlang der Linearachsen (22, 23, 24) erfolgen.

4. Verfahren nach einem der vorstehenden Ansprüche, **dadurch gekennzeichnet, dass** ausschließlich in den Verbindungs-Schwenkbewegungen (62) zur Verbindung zweier jeweils aufeinander folgender Bahnsegmente (61) Relativbewegungen von Werkzeug (4) und Werkstück (2) zueinander um die Schwenkachsen (41, 42) erfolgen.

5. Verfahren nach einem der vorstehenden Ansprüche, **dadurch gekennzeichnet, dass** Gruppen jeweils aufeinander folgender benachbarter Bahnsegmente (61) gebildet werden.

6. Verfahren nach einem der vorstehenden Ansprüche, **dadurch gekennzeichnet, dass** eine Verbindungs-Schwenkbewegung (62) des Werkzeuges (4) drei aufeinander folgende Phasen (65, 66, 67) aufweist, wobei eine erste Phase (65) eine Bewegung aufweist, bei der sich das Werkzeug (4) mit einer tangential anschließenden Kurvenbewegung vom Werkstück (2) entfernt, ohne dass dabei die Orientierung der Werkzeugachse verändert wird, eine zweite Phase (66) eine Bewegung aufweist, bei der die Orientierung der Werkzeugachse (43) des Werkzeuges (4) in einer tangential anschließenden Kurvenbewegung kontinuierlich so verändert wird, dass sie am Ende die Orientierung des folgenden Bahnsegments annimmt, und eine dritte Phase (67) eine Bewegung aufweist, bei der sich das Werkzeug (4) in Richtung zum Werkstück (2) in einer tangential anschließenden Kurvenbewegung an das nachfolgende Bahnsegment anschließt, ohne dass dabei die Orientierung der Werkzeugachse (43) verändert wird.

7. Verfahren nach einem der vorstehenden Ansprüche, **dadurch gekennzeichnet, dass** ausgehend von einem Startpunkt (64) ein Bahnsegment (61) auf die Weise bestimmt wird, dass das Werkzeug (4) und das Werkstück (2) innerhalb des Bahnsegments (61) sowie die beidseitig anschließenden Verbindungs-Schwenkbewegungen (62) keine Kollisionen aufweisen.

8. Verfahren nach einem der vorstehenden Ansprüche, **dadurch gekennzeichnet, dass** ein Bahnsegment (61) eine möglichst große Länge aufweist.

9. Verfahren nach einem der vorstehenden Ansprüche, **dadurch gekennzeichnet, dass** der Abstand der Startpunkte (64) benachbarter Bahnen (61) minimal ist.

10. Verfahren nach einem der vorstehenden Ansprüche, **dadurch gekennzeichnet, dass** die Positionen der Startpunkte (64) einem vorgegebenem Kurvenverlauf (68) folgen.

11. Verfahren nach einem der vorstehenden Ansprüche, **dadurch gekennzeichnet, dass** die Winkeldifferenzen der Orientierungen der Werkzeugachse (43) zum vorangehenden Bahnsegment (61) einen vorgegebenen Winkel nicht überschreiten.

12. Verfahren nach einem der vorstehenden Ansprüche, **dadurch gekennzeichnet, dass** die Orientierung der Werkzeugachse (43) innerhalb eines Bahnsegments (61) einer manuellen Vorgabe folgt.

13. Verfahren nach einem der vorstehenden Ansprüche, **dadurch gekennzeichnet, dass** der Startpunkt (64) für das erste Bahnsegment (611) durch einen Benutzer vorgegeben werden kann.

14. Verfahren nach einem der vorstehenden Ansprüche, **dadurch gekennzeichnet, dass** die nacheinander bearbeiteten Bahnsegmente (61) jeweils im Wesentlichen sortiert werden, wobeider Abstand zwischen dem Endpunkt (63) eines Bahnsegments (61) zum Startpunkt (64) des darauf folgenden Bahnsegments (61) minimal ist.

15. Verfahren nach einem der Ansprüche 1 bis 13 **dadurch gekennzeichnet, dass** die nacheinander bearbeiteten Bahnsegmente (61) jeweils im Wesentlichen sortiert werden, wobei die Änderungen der Orientierung der Werkzeugachse (43) minimal sind.

## Claims

1. Method of controlling relative movements of a tool (4) with respect to a workpiece (2), in which a tool axis (43) of the tool (4) can be swung and/or moved in all spatial dimensions for the material removal machining of the workpiece (2), and in which a desired target contour (21) of the workpiece (2) is produced by a sequence of relative movements along a tool path (6) of the tool (4), **characterized in that** the tool path (6) is divided into a plurality of path segments (61) along which the tool (4) is in engagement with the workpiece (2), with the orientation of the tool axis (43) is held constant relative to the workpiece (2) within a path segment (61) while being variable over the entire tool path (6), and with a respective end point (63) of a path segment (61) is connected with a starting point (64) of a further path segment (61) by means of a connecting pivotal movement (62) during which the tool (4) is not in engagement with the workpiece (2) and during which the orientation of the tool axis (43) can be changed.

2. Method according to Claim 1, **characterized in that** the tool is a milling cutter (4) or a laser head or a laser measuring device.

3. Method according to Claim 1 or 2, **characterized in that** during the movement of the tool (4) along an individual path segment (61) only relative movements of the tool (4) and workpiece (2) with respect to each other are carried out along the linear axes (22, 23, 24).

4. Method according to one of the preceding claims, **characterized in that**, exclusively in the connecting pivotal movements (62) for connecting two respectively following target segments (61), relative movements of the tool (4) and workpiece (2) with respect to each other about the pivot axes (41, 42) are carried out.

5. Method according to one of the preceding claims, **characterized in that** groups of respectively following neighbouring path segments (61) are formed.

6. Method according to one of the preceding claims, **characterized in that** a connecting pivotal movement (62) of the tool (4) has three successive phases (65, 66, 67), with a first phase (65) having a movement during which the tool (4) is removed from the workpiece (2) by means of a tangential, subsequent curved movement without, thereby, changing the orientation of the tool axis, a second phase (66) having a movement during which the orientation of the tool axis (43) of the tool (4) is continuously changed in a tangential, subsequent curved movement so that at the end it assumes the orientation of the following path segment, and a third phase (67) which has a movement during which the tool (4) is connected to the following path segment in the direction of the workpiece (2) in a tangential, subsequent curved movement without, thereby, changing the orientation of the tool axis (43).

7. Method according to one of the preceding claims, **characterized in that**, starting from a starting point (64), a path segment (61) is determined in such a way that the tool (4) and the workpiece (2) within the path segment (61) as well as the connecting pivotal movements (62) following at each end have no collisions.

8. Method according to one of the preceding claims, **characterized in that** a path segment (61) is as long as possible.

9. Method according to one of the preceding claims, **characterized in that** the distance between the starting points (64) of neighbouring paths (61) is minimized.

10. Method according to one of the preceding claims, **characterized in that** the positions of the starting points (64) follow a predetermined curved pattern (68).

11. Method according to one of the preceding claims, **characterized in that** the angle differences of the orientations of the tool axis (43) with respect to the preceding path segment (61) do not exceed a predetermined angle.

12. Method according to one of the preceding claims, **characterized in that** the orientation of the tool axis (43) within a path segment (61) is based on a manual preset.

13. Method according to one of the preceding claims, **characterized in that** the starting point (64) for the first path segment (611) can be predetermined by a user.

14. Method according to one of the preceding claims, **characterized in that** the subsequently machined path segments (61) each are essentially sorted so that the distance between the end point (63) of a path segment (61) and the starting point (64) of the next following path segment (61) is minimized.

15. Method according to one of Claims 1 to 13, **characterized in that** the subsequently machined path segments (61) each are essentially sorted so that the changes in the orientation of the tool axis (43) are minimized.

## Revendications

1. Procédé pour la commande de mouvements relatifs d'un outil (4) par rapport à une pièce à usiner (2), dans lequel un axe d'outil (43) de l'outil (4) peut être pivoté et/ou déplacé dans toutes les dimensions dans l'espace contre la pièce à outils (2) en vue de l'usinage de celle-ci par enlèvement de matière, et dans lequel on génère un contour cible souhaité (21) de la pièce à usiner (2) par une succession de mouvements relatifs le long d'une trajectoire (6) de l'outil (4), **caractérisé en ce que** la trajectoire (6) de l'outil est subdivisée en une pluralité de segments de trajectoire (61), le long desquels l'outil (4) se trouve en engagement avec la pièce à usiner (2), dans lequel l'orientation de l'axe d'outil (43) par rapport à la pièce à usiner (2) est maintenue constante à l'intérieur d'un segment de trajectoire (61), alors qu'elle est variable sur la totalité de la trajectoire (6) de l'outil, et dans lequel un point d'extrémité (63) d'un segment de trajectoire (61) est relié, via un mouvement pivotant de liaison (62), dans lequel l'outil (4) ne se trouve pas en engagement avec la pièce à usiner (2) et pendant le déroulement duquel l'orientation de l'axe d'outil (43) peut être modifié, à un point de départ (64) d'un autre segment de trajectoire (61).

2. Procédé selon la revendication 1, **caractérisé en ce que** l'outil est un outil de fraisage (4) ou une tête à laser ou un appareil de mesure à laser.

3. Procédé selon la revendication 1 ou 2, **caractérisé en ce que** lors du déplacement de l'outil (4) le long d'un unique segment de trajectoire (61) se produisent respectivement uniquement des mouvements relatifs de l'outil (4) et de la pièce à usiner (2) l'un par rapport à l'autre le long des axes linéaires (22, 23, 24).

4. Procédé selon l'une des revendications précédentes, **caractérisé en ce que** des mouvements relatifs de l'outil (4) et de la pièce à usiner (2) l'un par rapport à l'autre autour des axes de pivotement (41, 42) ont lieu exclusivement dans les mouvements pivotants de liaison (62) pour la liaison de deux segments de trajectoire (61) contigus.

5. Procédé selon l'une des revendications précédentes, **caractérisé en ce que** l'on forme des groupes de segments de trajectoire voisins (61) contigus.

6. Procédé selon l'une des revendications précédentes, **caractérisé en ce qu'**un mouvement pivotant de liaison (62) de l'outil (4) comporte trois phases successives (65, 66, 67), dans lesquelles une première phase (65) comprend un mouvement dans lequel l'outil (65) s'éloigne de la pièce à usiner (2) avec un mouvement en courbe qui se raccorde tangentiellement sans qu'ici l'orientation de l'axe d'outil soit modifiée, une seconde phase (66) comprend un mouvement dans lequel l'orientation de l'axe (43) de l'outil (4) est modifiée en continu dans un mouvement en courbe qui se raccorde tangentiellement de telle manière qu'elle adopte à la fin l'orientation du segment de trajectoire suivant, et une troisième phase (67) comprend un mouvement dans lequel l'outil (4) se raccorde au segment de trajectoire suivant en direction de la pièce à usiner (2) dans un mouvement en courbe qui se raccorde tangentiellement, sans qu'ici l'orientation de l'axe d'outil (43) soit modifiée.

7. Procédé selon l'une des revendications précédentes, **caractérisé en ce que**, partant d'un point de départ (64), un segment de trajectoire (61) est déterminé de telle façon que l'outil (4) et la pièce à usiner (2) ne présentent aucune collision à l'intérieur du segment de trajectoire (61) ainsi que des deux mouvements pivotants de liaison (62) qui s'y raccordent des deux côtés.

8. Procédé selon l'une des revendications précédentes, **caractérisé en ce qu'**un segment de trajectoire (61) présente une longueur aussi grande que possible.

9. Procédé selon l'une des revendications précédentes, **caractérisé en ce que** la distance des points de départ (64) de segments de trajectoire voisins (61) est minimale.

10. Procédé selon l'une des revendications précédentes, **caractérisé en ce que** les positions des points de départ (64) suivent un tracé en courbe prédéterminée (68).

11. Procédé selon l'une des revendications précédentes, **caractérisé en ce que** les différences angulaires des orientations des axes d'outil (43) par rapport au segment de trajectoire précédente (61) ne dépassent pas un angle prédéterminé.

12. Procédé selon l'une des revendications précédentes, **caractérisé en ce que** l'orientation des axes d'outil (43) suit une définition manuelle à l'intérieur d'un segment de trajectoire (61).

13. Procédé selon l'une des revendications précédentes, **caractérisé en ce que** le point de départ (64) pour le premier segment de trajectoire (611) peut être imposé par un utilisateur.

14. Procédé selon l'une des revendications précédentes, **caractérisé en ce que** les segments de trajectoire (61) usinés les uns après les autres sont respectivement sensiblement triés de sorte que la distance entre le point d'extrémité (63) d'un segment de trajectoire (61) et le point de départ (64) du segment de trajectoire (61) successif est minimale.

15. Procédé selon l'une des revendications 1 à 13, **caractérisé en ce que** les segments de trajectoire (61) usinés les uns après les autres sont respectivement sensiblement triés de sorte que les modifications de l'orientation des axes d'outil (43) sont minimales.
